# EUROPEAN PATENT SPECIFICATION

(11) **EP 0 576 943 B1**
(45) Date of publication and mention of the grant of the patent: **22.01.1997**
(21) Application number: 93109831.3
(22) Date of filing: 19.06.1993
(51) Int. Cl.: C09D 5/44

(54) **Process for coating a metal substrate**
Verfahren zum Überziehen eines Metallsubstrats
Procédé d'enduction d'un substrat métallique

(30) Priority: 30.06.1992 US 906636
(43) Date of publication of application: 05.01.1994
(73) Proprietor: BASF CORPORATION, Parsippany, NJ 07054 (US)
(72) Inventor: Schock, Kevin M., Minden, Michigan 48456 (US); December, Timothy S., Rochestor, Michigan 48086 (US); Northrop, Patrick J., Southfield, Michigan 48086 (US)
(74) Representative: Münch, Volker, Dr.

(56) References cited:
- EP-A- 0 016 723
- EP-A- 0 259 255
- CA-A- 2 075 651
- DATABASE WPI Week 8523, Derwent Publications Ltd., London, GB; AN 85-139744

## Description

### Field of the Invention

This invention relates to process for coating metal substrates.

### Background of the Invention

Electrodeposition coating, or electrocoating, is widely used in the art for the application of polymer coatings to metal substrates. Electrodeposition baths usually comprise a principal film-forming resin, such as an acrylic or epoxy resin, with ionic groups that can be salted so that the resin can be dispersed or dissolved in an aqueous bath. Pigments (dispersed in resin pastes, dyes, flow control agents, and other additives are often included in the electrocoat bath.

For automotive or industrial applications where hard electrocoat films are desired, the bath also includes a blocked crosslinking agent that unblocks under appropriate conditions (e.g., with the application of heat) to react with functional groups on the principal resin and thus cure the coating. Although a variety of crosslinking agents can be used, such as melamine resin, aliphatic polyisocyanates or isocyanurates, or aromatic polyisocyanates or isocyanurates, the aromatic polyisocyanates or isocyanurates are often preferred for a variety of reasons (e.g., reduced yellowing, emulsion stability, corrosion-resistance, chip-resistance).

Electrocoat films are often used as primers on metal surfaces, over which other paints or films, such as a pigmented resin coating, are applied. In such instances, it is desirable for the bond between the electrocoat primer and the adjacent layer to be strong so as to maintain the structural integrity of the multilayer coating system. If the bond between the electrocoat primer and the adjacent layer is weakened over a period of time after the coating process, the layers can be subject to delamination.

In the case of automotive coatings applications, electrocoat films are used as primers over which a pigmented resin coating is applied. Often, the pigmented resin coating is part of a base/clear coating system in which a clear coat is applied over the pigmented basecoat, although high-solids enamels, which do not require a clearcoat, are widely used as well. In the highly demanding field of automotive coatings, any delamination between the electrocoat primer and the pigmented resin layer will be highly detrimental to the appearance of the film to the point of being unacceptable to the customer.

A variety of techniques have been tried to reduce the delamination problem. For example, so-called "primer surfacer" layers have been interposed between the electrocoat primer layer and the pigmented resin layer. Such primer surfacer layers typically comprise a polyester or acrylic resin that is crosslinked with an aminoplast or isocyanate curing agent. Primer surfacer layers can reduce delamination; however, they increase the difficulty and expense of the automotive coating process, as well as contributing to increased VOC emissions. It is thus a significant problem to reduce delamination without the use of a primer surfacer.

Delamination can also be reduced through the use of a crosslinking agent other than an aromatic polyisocyanate or isocyanurate. Such a crosslinking agent, however, will not provide the above-described advantages provide by the aromatic isocyanate crosslinkers.

JP 62/236873 describes an electrocoat composition comprising a UV absorber such as a benzotriazole, alleging resistance to delamination. UV absorbers, however, they may not provide the desired degree of delamination reduction.

EP-A-16 723 discloses light stabilizers for base/clear coating systems.

### Summary of the Invention

It has now been found that regenerative radical scavenger compounds can be used in electrocoat compositions to provide delamination resistance to electrocoated articles. Thus, according to the invention, there is provided a process for coating a metal substrate, comprising the steps of electrocoating a layer onto the substrate of a coating composition comprising a regenerative radical scavenger compound, and applying a pigmented resin coating layer thereover.

The present invention provides electrocoated articles that are resistant to delamination between the electrocoated primer layer and an overcoated pigmented resin layer. Delamination resistance can be obtained even when an aromatic polyisocyanate crosslinking agent is used in the electrocoat composition and even if no primer surfacer layer between the electrocoat primer layer and the pigmented resin layer is present. Significant improvements in delamination can be achieved by using regenerative radical scavengers according to the invention compared to conventional electrocoat additives, such as antioxidants or UV absorbers.

### Description of the Preferred Embodiments

Regenerative radical scavengers are well-known in the art. These compounds are typically hindered amines or derivatives of hindered amines (e.g., N-alkoxy-substituted hindered amines). Although many regenerative radical scavengers are not actually amines due to the variety of subtituents on the 'amino' nitrogen, as a class they are often referred to as 'hindered amine light stabilizers' (HALS). They are described for example, in P. Klemchuk, "Introduction to Hindered Amine Stabilizers", Polymer Stabilization and Degradation, Am. Chem. Soc., 1985, the disclosure of which is incorporated herein by reference.

Examples of regenerative radical scavengers that can be used in the present invention include:

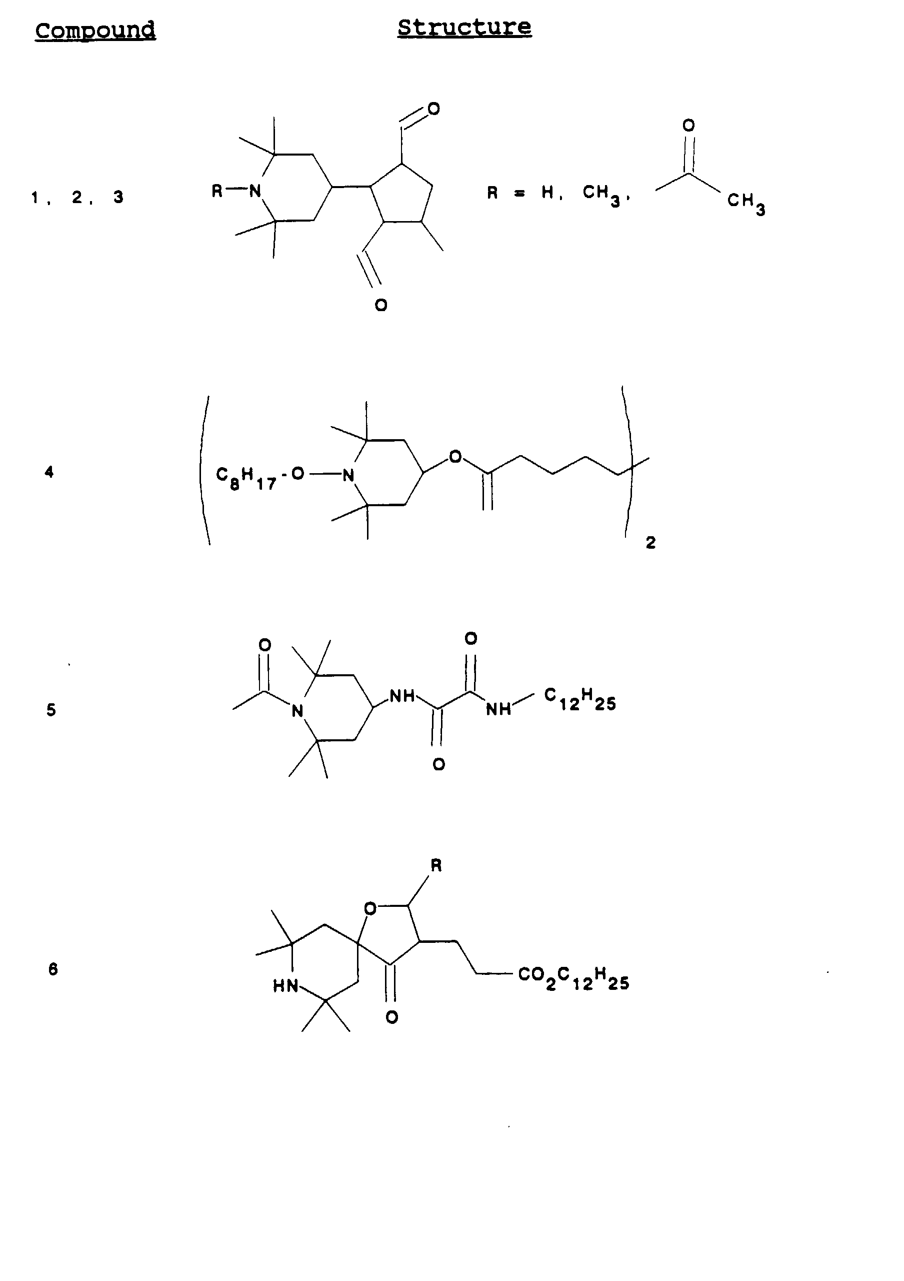

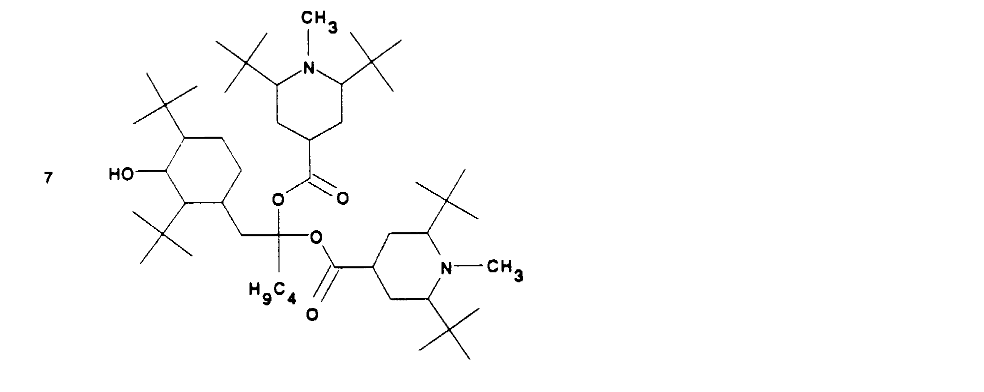

The present invention is applicable to both anodic and cathodic electrodeposition coating compositions, although cathodic electrocoat compositions are preferred. Water-dispersible resins usable in the electrodeposition coating process may be classified, depending upon their dispersed state, into the solution type, the dispersion type, the emulsion type, and the suspension type. These types of resins are collectively referred to as "water-dispersible resins" herein. A wide variety of such resins are known and may be used in this invention.

Water-dispersible resins used in the anodic electrodeposition coating process must have an anionic functional group such as carboxyl group for imparting the resin with negative charges and for rendering the resin hydrophilic.

A variety of such resins are known including acrylic, polyester, polyether, phenolic, epoxy, polyurethane, polyamide, polybutadiene, and oil based resins. Typical examples thereof are acrylic copolymers containing acrylic or methacrylic acid, maleinized natural and synthetic drying oils, maleinized polybutadiene, half esters and half amides of maleinized oils and polymers.

Water-dispersible resins used in the cathodic electrodeposition coating process have a cationic functional group such as primary, secondary or tertiary amine moiety as a positively chargeable hydrophilic group. A variety of such resins are known including epoxy, polyether, polyester, polyurethane, polyamide, polybutadiene, phenolic and acrylic resins.

Cationic resins have been described in great number in the literature. They typically contain a number of basic groups, such as primary, secondary or tertiary amino groups, so as to provide dispersibility with water. If these resins contain primary and/or secondary amine groups, then they may or may not also contain hydroxyl groups and preferably they do. If only tertiary amino groups are present in the cationic resin, then the resin must contain hydroxyl or other functional groups in order to enable cross-linking. The amino equivalent weight of the cationic resin can range from 150 to 3000, and preferably 500 to 2000. The hydroxyl equivalent weight of the resins, if they have OH groups, is generally between 150 and 1000, and preferably 200 to 500. In addition, the resins may contain C=C double bonds, the C=C equivalent weight preferably being 500 to 1500.

The molecular weight (mean weight) of a typical cationic resin is usually in the range from 300 to 50,000, and preferably 5000 to 20,000.

Examples of cationic resins are described in the Journal of Coatings Technology, Vol. 54, No. 686, (1982), p. 33-41 ("Polymer Compositions for Cationic Electrodepositable Coatings"), the disclosure of which is incorporated by reference. Polymers of alpha, beta-olefinically unsaturated monomers that contain hydroxyl and/or amino groups may be mentioned here. The hydroxyl or amino groups may be introduced using appropriate monomers in the copolymerization, for example by means of hydroxyl or amino esters of alpha, beta-olefinically unsaturated carboxylic acids, such as hydroxyalkyl (meth)-acrylates or aminoalkyl (meth)acrylates, or by polymeranalogous reaction with diamines or polyamines, for example with N,N-dimethylaminopropylamine, with formation of amide, amino or urethane groups. The polyaminopolyamides, which can be obtained from dimerized fatty acids and polyamines, are a further group. Aminopolyether polyols, which can be prepared by reaction of primary or secondary amines with a polyglycidyl ether, are particularly suited for this. Sufficient epoxide groups to convert all amino groups into tertiary amino groups are advantageously present here. The preferred polyglycidyl ethers are polyglycidyl ethers of bisphenol A and similar polyphenols. They can be prepared, for example by etherifying a polyphenol using an epihalohydrin, such as epichlorohydrin, in the presence of alkali.

The polyglycidyl ethers of the polyphenols may be reacted as such with the amines, but it is frequently advantageous to react some of the reactive epoxide groups with a modified material in order to improve the film properties. The reaction of the epoxide groups with a polyol or a polycarboxylic acid is particularly preferred.

Useful polyols can include polyether polyols, polyester polyols, or urethane polyols. Polyether polyols can be prepared by addition polymerization of alkylene oxides (for example ethylene oxide, propylene oxide, tetrahydrofuran) with low-molecular-weight polyols having 2 to 8 carbon atoms and a molecular weight of about 50 to 300 (for example ethylene glycol, diethylene glycol, propylene glycol, dipropylene glycols, glycerol, trimethylolpropane, 1,2,6-hexanetriol, pentaerythrite). If ethylene oxide is used alone or in combination with other alkylene oxides as alkylene oxide components, the water-solubility of the resin is improved.

Polyester polyols cab be prepared by reaction of the above mentioned low-molecular weight polyols or epoxy compounds, for example fatty acid glycidyl esters, with polycarboxylic acid (for example adipic acid, succinic acid, maleic acid, phthalic acid, or terephthalic acid), or derivatives thereof.

Polyester polyols can be prepared by ring-opening polymerization of a cyclic ester, such as caprolactone or butyrolactone.

Urethane-modified polyls can be obtained by reaction of an excess of the abovementioned polyether polyols or polyester polyols with an organic polyisocyanate.

The above-mentioned polycarboxylic acids are obtained by reaction of the polyols described above with an excess of polycarboxylic acids or, preferably, the anhydrides thereof. They can likewise be obtained by esterification of polycarboxylic acids, or anhydrides thereof, using low-molecular weight polyols, such as ethylene glycol, propylene glycol, etc. Low-molecular weight polyether polyamines or polyamines, such as, for example, hexamethylenediamine, may also be employed in place of the low-molecular weight polyols.

The modification of the aminopolyether polyols using polyols or polycarboxylic acids is preferably carried out before the reaction of the polyglycidyl ethers with the primary or secondary amaines. However, it is also possible to select the ratio of the polyglycidyl ether used as starting material to the amines in such a fashion that an excess of epoxy groups is present. The epoxy groups may then be reacted with the polycarboxylic acids or polyols. It is furthermore possible to further modify the final product, which no longer contains epoxide groups, by reaction of the hydroxyl groups with glycidyl ethers.

According to the curing mechanism of particular resins, they may be classified into three classes. The first one is those capable of self-crosslinking through a radical or oxidative polymerization reaction. The second class of resins requires a crosslinking agent such as melamine resins or blocked polyisocyanates. The third one utilizes both the selfcrosslinking reaction and the crosslinking agent in combination.

According to the type of energy source required for initiating the crosslinking reaction, the water-dispersible, chargeable resins may also be classified into the ambient temperature curing or more preferably heat-curing.

The water-dispersible resins useful in the present invention are typically hydrophilic such that they are not soluble or dispersible in water when they are in the form of a free acid or free base, but become soluble or dispersible to make a stable aqueous solution or dispersion when a sufficient amount (e.g., at least 20%, and more typically 50%) of the acid or base function is neutralized. If the water-dispersible resins are too hydrophilic, they fail to form a coating film having satisfactory water- or corrosion resistance and/or the application of electrodeposition coating processes becomes difficult.

In order to enhance various film properties, the water-dispersible resins are often used in the form of an emulsion in which the water-dispersible resin constitutes a continuous phase, and an optional water-insoluble resin free from chargeable hydrophilic groups (e.g., an epoxy acrylate resin) constitutes a dispersed phase.

When the resin can be crosslinked with a crosslinking agent included in the coating composition for the electrocoat primer layer, any of a number of crosslinking agents or curing agents may be used. Commonly-used crosslinking agents include blocked polyisocyanates including isocyanaurates of polyisocyanates (e.g., hexamethylene diisocyanate), aminoplasts (e.g., melamine resin, benzoguanamine resin), and transesterification crosslinking agents.

In a preferred embodiment of the invention, the crosslinking agent is an aromatic polyisocyanate, including isocyanurates of aromatic polyisocyanates. Useful aromatic polyisocyanates include toluene diisocyanate (TDI), methylene diphenyl diisocyanate (MDI), tetramethylxylene diisocyanate, and the like. These isocyanates are pre-reacted with a blocking agent such an oxime or an alcohol, which blocks the isocyanate crosslinking functionality. Upon heating, the blocking agents separate and crosslinking occurs.

The electrodepositable coating compositions of the present invention are dispersed in aqueous medium. The term "dispersion" as used within the context of the present invention is believed to be a two-phase translucent or opaque aqueous resinous system in which the resin is in the dispersed phase and water the continuous phase. The average particle size diameter of the resinous phase is about 0.1 to 10 microns, preferably less than 5 microns. The concentration of the resinous products in the aqueous medium is, in general, not critical, but ordinarily the major portion of the aqueous dispersion is water. The aqueous dispersion usually contains from about 3 to 50 percent preferably 5 to 40 percent by weight resin solids. Aqueous resin concentrates which are to be further diluted with water, generally range from 10 to 30 percent by total weight solids.

The above components are uniformly dispersed in an aqueous medium containing a base in case of the anodic electrodeposition or an acid in case of the cathodic electrodeposition in an amount sufficient to neutralize enough of the ionic groups to impart water-dispersibility to the resin. Examples of bases include ammonia, diethanolamine, triethanolamine, methylethanolamine, diethylamine, morpholine, and potassium hydroxide. Examples of acids include phosphoric acid, acetic acid, propionic acid and lactic acid.

Besides water, the aqueous medium may also contain a coalescing solvent. Useful coalescing solvents include hydrocarbons, alcohols, esters, ethers and ketones. The preferred coalescing solvents include alcohols, polyols and ketones. Specific coalescing solvents include monobutyl and monohexyl ethers of ethylene glycol, and phenyl ether of propylene, glycolethylcellosolve, propylcellosolve, butylcellosolve, ethyleneglycol dimethyl ether, or diacetone alcohol. A small amount of a water-immiscible organic solvent such as xylene, toluene, methyl isobutyl ketone or 2-ethylhexanol may be added to the mixture of water and the water-miscible organic solvent. The amount of coalescing solvent is not unduly critical and is generally between about 0 to 15 percent by weight, preferably about 0.5 to 5 percent by weight based on total weight of the resin solids.

The electrodeposition coating composition used in this invention may further contain conventional pigments such as titanium dioxide, ferric oxide, carbon black, aluminum silicate, precipitated barium sulfate, aluminum phosphomolybdate, strontium chromate, basic lead silicate or lead chromate. The pigment-to-resin weight ratio can be important and should be preferably less than 50:100, more preferably less than 40:100, and usually about 20 to 40:100. Higher pigment-to-resin solids weight ratios have also been found to adversely affect coalescence and flow.

In a preferred embodiment of the invention, the electrodeposition coating composition also includes a UV absorber and/or an antioxidant. UV absorbers are well-known in the art, and often contain a benzotriazole ring. Useful UV absorbers include compounds of the formula: 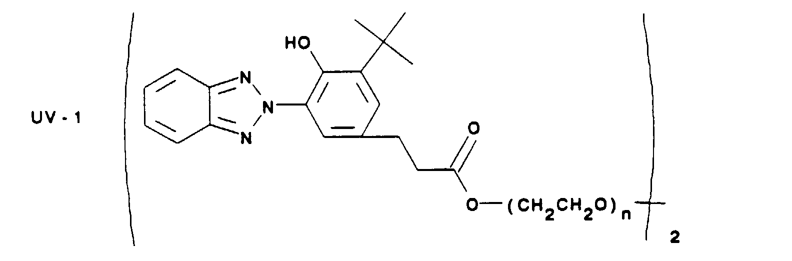 where n is a positive integer

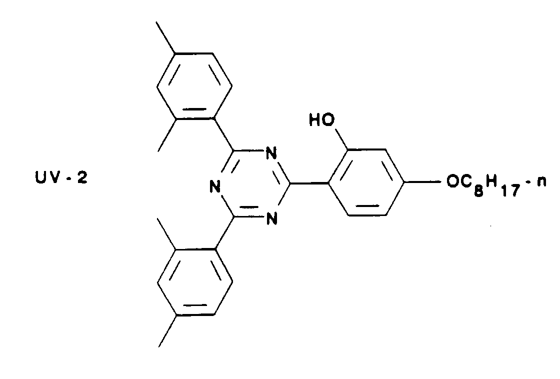

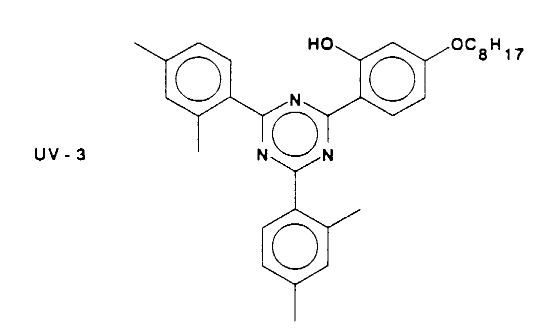

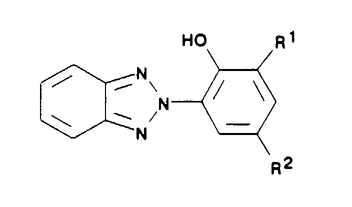

| Compound | R¹ | R² |
|---|---|---|
| UV-4 | t-butyl | -(CH₂)₂CO₂(CH₂CH₂O)₇H |
| UV-5 | t-butyl | -OC₈H₁₇-n |
| UV-6 | H | -CH₃ |
| UV-7 | t-amyl | t-amyl |

In a preferred embodiment of the invention, the electrocoat primer composition also includes an antioxidant. Antioxidants are well-known in the art. One common class of antioxidants is the hindered phenol. Such compounds are typically of the formula: 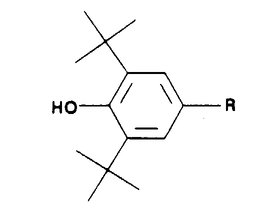 where R is a substituent such as an alkoxy.

The electrodeposition coating compositions used in the invention can contain optional ingredients such as wetting agents, surfactants, defoamers and so forth. Examples of surfactants and wetting agents include alkyl imidazolines such as those available from Ciba-Geigy Industrial Chemicals as Amine C®, acetylenic alcohols available from Air Products and Chemicals as Surfynol® 104. These optional ingredients, when present, constitute from about 0 to 20 percent by weight of resin solids. Plasticizers are optional ingredients because they promote flow. Examples are high boiling water immiscible materials such as ethylene or propylene oxide adducts of nonyl phenols or bisphenol A. Plasticizers can be used and if so are usually used at levels of about 0 to 15 percent by weight resin solids.

Curing catalysts such as tin catalysts are usually present in the coating composition. Examples are dibutyltin dilaurate and dibutyltin oxide. When used, they are typically present in amounts of about 0.05 to 2 percent by weight tin based on weight of total resin solids.

In general, sufficient water is added so that the dispersion has a solids content of more than 20, preferably more than 30% by weight.

The electrodeposition coating composition should have an electroconductivity from 0.1 to 5 mS/cm, preferably from 0.5 to 3 mS/cm. When this value is too low, it is difficult to obtain a film thickness having desired protective and other functions. Conversely, if the composition is too conductive, problems such as the dissolution of substrate or counter electrode in the bath, uneven film thickness or poor water or corrosion resistance may arise.

The electrodeposition coating composition used in this invention may be applied on a conductive substrate by the electrodeposition coating process at a nonvolatile content of 10 to 25% by weight to a dry film thickness of 15 to 35 microns. After applying, the coating may be cured at ambient or an elevated temperature, depending upon the nature of particular base resins.

The electrodeposition of the coating preparations according to the invention may be carried out by any of a number of processes known to those skilled in the are. The deposition may be carried out on all electrically conducting substrates, for example metal, such as steel, copper, aluminum and the like.

According to the invention, a pigmented resin coating and optionally a clearcoat layer is applied over the electrocoat primer layer. In automotive applications, the pigmented resin layer is often called a basecoat or pigmented basecoat. The resin in the pigmented resin layer can be of a number of resins known in the art. For example, the resin can be an acrylic, a polyurethane, or a polyester. Typical pigmented resin coating formulations are described in U.S. Patents 4,791,168, 4,414,357, and 4,546,046, the disclosures of which are incorporated herein by reference. In a preferred embodiment, the resin is an E-caprolactone-modified acrylic resin, as described in U.S. Patent 4,720,528, the disclosure of which is incorporated herein by reference. The pigmented resin can be cured by any of the known mechanisms and curing agents, such as a melamine polyol reaction (e.g., melamine cure of a hydroxy-functional acrylic resin).

The invention is further described in the following examples.

### Preparation 1 - Electrocoat Composition

To a 5 liter round bottom flask set up with a mixing paddle, condenser and temperature probe were added the following materials:
1049.9 g of the diglycidyl ether of bisphenol A
379.3 g of a polyethlene oxide diol
305.1 g of bisphenol A
79.8 g of xylene
This mixture was heated to 135°C and the following catalyst adds were made:
3.2 g of dimethylbenzylamine
5.8 g of xylene
and
3.7 g of dimethylbenzylamine
5.8 g of xylene

The temperature was then maintained at 143°C for 120 minutes and the weight per epoxy (WPE) was measured at 1200 gNV/eq. exopy. 1428.7 g of a previously prepared crosslinker composed of 2,4-toluene-diisocyanate (TDI), trimethylolpropane and blocked with an alcohol was then added to cool the temperature to 100°C.

The remaining epoxy was then capped with two different secondary amines in a mixture of:
118.4 g Diketimine of Diethylenetriamine
5.0 g phenyl cellosolve
80.6 g Methylethanolamine

The temperature was then maintained for 1 hour at 110°C. 320.0 g of a previously prepared crosslinker based on hexamethylenediisocyanate (HDI) blocked with an alcohol was then added.

The temperature was maintained near 100°C for 30 minutes with mixing and then 3804.2 g of the above resin was added to:
3416.2 g of deionized water
44.7 g of surfactant
110.1 g of lactic acid

The resin was emulsified and then diluted with three 5909.0 g portions of deionized water to 37% non-volatile. The resulting resin dispersion was set aside for use as a principle resin emulsion.

Into a 18,9 l (5-gallon) bucket, 446.18 g of radical scavenger Compound 4 and 1880.14 g of an epoxy grind resin were mixed at high speed for with a cowles blade for 15 min. After a homogeneous mixture was obtained, the following components were added in order:

| | |
|---|---|
| water | 2627.66 g |
| carbon black | 125.96 g |
| dibutyltin oxide catalyst | 218.63 g |
| TiO₂ | 4299.14 g |
| Lead silicate | 251.74 g |
| water | 429.39 g |

The mixture was then agitated for 1 hour.

After a holding period, the mixture was dispersed using a sand mill to achieve a fineness grind of 11. The mixture was then incorporated into an electrocoat bath with water and the principal resin described above. The bath was formulated for a pigment to binder ratio of 20:100 and a % nonvolatiles of 20%.

### Preparation 2 - Electrocoat Composition

The procedure for Preparation 1 was repeated except that compound 7 was used in place of compound 4.

### Preparation 3 - Electrocoat Composition

The procedure for Preparation 1 was repeated except that compound 4 was not added to the pigment paste, and a 50/50 mixture of scavenger compound 4 and UV-4 were incorporated in the principal resin emulsion at a level of 2% based on the weight of emulsion solids.

### Preparation 4 - Electrocoat Composition

To a 18,9 l (5 gallon) plastic pail were added the following materials:
3515.8 g principal epoxy resin 2(reaction product of diglycidylether of bisphenol A, bisphenol A, dodecylphenol, and dimethylbenzylamine)
126.0 g lactic acid
895.4 g of a TDI crosslinker
828.7 g of an HDI crosslinker
329.3 g of a polypropylene oxide diluent
25.2 g of an alkylether wetting agent
8.4 g surfactant, and
84.0 g regenerative radical scavenger compound 4

This material was then mixed with a high speed air mixer for 30 minutes, after which the material was emulsified by the addition of a 1854.3 g portion and then a 4381.0 portion of deionized water.

The resulting mixture was incorporated along with an epoxy pigment grind resin into an aqueous electrocoat bath. The bath was formulated for a pigment to binder ratio of 20:100 and a % nonvolatiles of 20%.

### Preparation 5 - Electrocoat Composition

The procedure for Preparation 4 was repeated except that 84 g of compound 7 was used along with 84 g of compound UV-3.

### Examples 1-6

Steel panels were electrocoated with Preparations 1-6 at a thickness of 23-30 µm, and cured for 20 minutes at a temperature of 176-201°C. A pigmented resin layer was coated thereover at a thickness of 20-51 µm using an acrylic coating composition in an organic solvent (≅52% nonvolatiles), pigments, and 1% Tinuvin^{®} 1130 UV absorber. The coated panels were then baked at 121-129°C to cure the pigmented resin layer.

To evaluate delamination performance, the panels were given an outdoor exposure of 4 months. As a comparison, panels were also coated with Preparations A and B and given identical exposures. Comparison Preparation A was identical to Preparation 1, but no Compounds 4, UV-1, or UV-4 were included. Preparation B was identical to Preparation 4, but no Compound 4 was included. After exposure, the panels were evaluated for delamination on a scale of 1-10 where 10 equals best performance and 0 equals total delamination failure. The results of the exposure testing are set forth in the table below.

| Preparation | Rating at 3 Months | Rating at 4 Months |
|---|---|---|
| A | 2 | 0 |
| 1 | 10 | 5 |
| 2 | 4 | 0 |
| 3 | 10 | 10 |
| B | 2 | 0 |
| 4 | 10 | 10 |
| 5 | 10 | 10 |

The above results clearly demonstrate the improved delamination performance provided by the invention.

The invention has been described in detail with reference to particular embodiments thereof. It is understood that modifications and variations may be made within the spirit and scope of the invention.

## Claims

1. A process for coating a metal substrate, comprising the steps of:
electrocoating a layer onto the substrate of a coating composition comprising a regenerative radical scavenger compound, and
applying a pigmented resin coating layer thereover.

2. A process according to claim 1 wherein the radical scavenger is a hindered amine light stabilizer compound.

3. A process according to claim 1 or 2 wherein the pigmented resin coating layer is applied directly over the electrocoated layer with no primer surfacer layer interposed therebetween.

4. A process according to claims 1 to 3, further comprising the step of applying a clearcoat layer over the pigmented resin coating layer.

5. A process according to claims 1 to 4 wherein the electrocoat coating composition is a curable composition comprising an amino-group containing resin having functional groups that are reactive with isocyanate, an aromatic polyisocyanate cross-linking agent, and the radical scavenger compound.

6. A process according to claims 1 to 5 wherein the radical scavenger compound is present in an amount sufficient to reduce the level of decomposition of the aromatic isocyanate induced by exposure to ultraviolet radiation by 50% compared the same composition without the radical scavenger compound.

7. A process according to claims 1 to 6 wherein the radical scavenger compound is present at a level of 0.1 to 10%, based on the amount of resin solids in the coating composition.

8. A process according to claims 1 to 7 wherein the radical scavenger compound is present at a level of 0.1 to 2% based on the amount of resin solids in the coating composition.

9. A process according to claims 1 to 8 wherein the pigmented resin coating comprises an ε-caprolactone modified acrylic resin.

10. A process according to claims 1 to 9 wherein the coating composition further comprises an ultraviolet absorber.

11. A process according to claims 1 to 10 wherein the coating composition further comprises an antioxidant.

12. A process according to claims 1 to 11 wherein the coating composition comprises an aromatic isocyanate crosslinking agent and a resin that is curable or cured with an aromatic isocyanate crosslinking agent.

## Patentansprüche

1. Verfahren zur Beschichtung eines Metallsubstrats, bei dem man das Substrat durch Elektrotauchlackierung mit einer Schicht aus einer einen regenerierbaren Radikalfänger enthaltenden Beschichtungszusammensetzung beschichtet und darauf eine pigmentierte Harzüberzugsschicht aufträgt.

2. Verfahren nach Anspruch 1, bei dem man als Radikalfänger ein Lichtschutzmittels des HALS-Typs einsetzt.

3. Verfahren nach Anpruch 1 oder 2, bei dem man die pigmentierte Harzüberzugsschicht ohne dazwischenliegende Füllgrundschicht direkt auf die durch Elektrotauchlackierung aufgebrachte Schicht aufträgt.

4. Verfahren nach den Ansprüchen 1 bis 3, bei dem man über der pigmentierten Harzüberzugsschicht eine Klarlackschicht aufträgt.

5. Verfahren nach den Ansprüchen 1 bis 4, bei dem die Elektrotauchlackzusammensetzung eine härtbare Zusammensetzung, enthaltend ein aminogruppenhaltiges Harz mit gegenüber Isocyanat reaktiven funktionellen Gruppen, ein aromatisches Polyisocyanat als Vernetzer und den Radikalfänger, darstellt.

6. Verfahren nach den Ansprüchen 1 bis 5, bei dem der Radikalfänger in einer Menge vorliegt, die zur Verringerung des Grads der durch UV-Strahlung induzierten -Zersetzung des aromatischen Isocyanats um 50% im Vergleich zu der gleichen Zusammensetzung ohne Radikalfänger ausreicht.

7. Verfahren nach den Ansprüchen 1 bis 6, bei dem der Radikalfänger in einem Gehalt von 0,1 bis 10%, bezogen auf die Menge der Harzfeststoffe in der Beschichtungszusammensetzung, vorliegt.

8. Verfahren nach den Ansprüchen 1 bis 7, bei dem der Radikalfänger in einem Gehalt von 0,1 bis 2%, bezogen auf die Menge der Harzfeststoffe in der Beschichtungszusammensetzung, vorliegt.

9. Verfahren nach den Ansprüchen 1 bis 8, bei dem der pigmentierte Harzüberzug ein mit ε-Caprolacton modifiziertes Acrylharz enthält.

10. Verfahren nach den Ansprüchen 1 bis 9, bei dem die Beschichtungszusammensetzung zusätzlich noch einen UV-Absorber enthält.

11. Verfahren nach den Ansprüchen 1 bis 10, bei dem die Beschichtungszusammensetzung zusätzlich noch ein Antioxidans enthält.

12. Verfahren nach den Ansprüchen 1 bis 11, bei dem die Beschichtungszusammensetzung ein aromatisches Isocyanat als Vernetzer und ein mit einem aromatischen Isocyanat als Vernetzer härtbares oder gehärtetes Harz enthält.

## Revendications

1. Procédé de revêtement d'un substrat métallique, comprenant les étapes
d'électrodéposition d'une couche sur le substrat d'une composition de revêtement comprenant un composé de scavenger de radicaux régénérateur, et
d'application d'une couche de revêtement de résine pigmentée par-dessus cette dernière.

2. Procédé selon la revendication 1, caractérisé en ce que le scavenger de radicaux est un composé de stabilisation à la lumière à amine à empêchement stérique.

3. Procédé selon la revendication 1 ou 2, caractérisé en ce que la couche de revêtement de résine pimentée est appliquée directement par-dessus la couche électrodéposée sans couche de surfaçage d'apprêt interposée entre elles.

4. Procédé selon les revendications 1 à 3, comprenant en plus l'étape d'application d'une couche revêtement clair par-dessus la couche de revêtement de résine pigmentée.

5. Procédé selon les revendications 1 à 4, caractérisé en ce que la composition de revêtement électrodéposée est une composition durcissable comprenant une résine contenant un groupement amino, ayant des groupements fonctionnels qui sont réactifs à l'égard de l'isocyanate, d'un composé réticulant de polyisocyanate aromatique et du composé de scavenger de radicaux.

6. Procédé selon les revendications 1 à 5, caractérisé en ce que le composé de scavenger de radicaux est présent dans une quantité suffisante à réduire le niveau de décomposition de l'isocyanate aromatique, induit par l'exposition à un rayonnement ultraviolet, de 50 %, par comparaison avec la même composition sans le composé de scavenger de radicaux.

7. Procédé selon les revendication 1 à 6, caractérisé en ce que le composé de scavenger de radicaux est présent à un niveau de 0,1 à 10 %, sur la base de la quantité de solides de résine dans la composition de revêtement.

8. Procédé selon les revendications 1 à 7, caractérisé en ce que le composé de scavenger de radicaux est présent à un niveau de 0,1 à 2 %, sur la base de la quantité de solides de résine dans la composition de revêtement.

9. Procédé selon les revendication 1 à 8, caractérisé en ce que le revêtement de résine pigmentée comprend une résine acrylique modifiée à l'epsilon-caprolactone.

10. Procédé selon les revendication 1 à 9, caractérisé en ce que la composition de revêtement comprend en plus un agent d'absorption des UV.

11. Procédé selon les revendication 1 à 10, caractérisé en ce que la composition de revêtement comprend en plus un agent anti-oxydation.

12. Procédé selon les revendications 1 à 11, caractérisé en ce que la composition de revêtement comprend un agent de réticulation d'isocyanate aromatique et une résine qui est durcissable ou durcie à l'aide d'un agent de réticulation d'isocyanate aromatique.
